# FASCICULE DE BREVET EUROPEEN

(11) **EP 0 692 763 B1**
(45) Date de publication et mention de la délivrance du brevet: **22.03.2000**
(21) Numéro de dépôt: 95401502.0
(22) Date de dépôt: 23.06.1995
(51) Int. Cl.: G06F 9/46

(54) **Système informatique ouvert à serveurs multiples**
Offenes Rechnersystem mit mehreren Servern
Open computersystem with multiple servers

(30) Priorité: 13.07.1994 FR 9408764
(43) Date de publication de la demande: 17.01.1996
(73) Titulaire: BULL S.A., 78430 Louveciennes (FR)
(72) Inventeur: Sitbon, Gérard, F-94400 Vitry (FR); Urbain, François, F-75002 Paris (FR); Saliba, Thérèse, F-78180 Montigny Le Bretonneux (FR); Fawcett, Richard A. Sr, PHEONIX, AZ. 85023 (US)
(74) Mandataire: Colombe, Michel

(56) Documents cités:
- EP-A- 0 601 579
- US-A- 5 249 290
- IEEE TRANSACTIONS ON COMPUTERS, vol. 39,no. 10, 1 Octobre 1990 pages 1232-1250, XP 000165949 BONOMI F ET AL 'ADAPTIVE OPTIMAL LOAD BALANCING IN A NONHOMOGENEOUS MULTISERVER SYSTEM WITH A CENTRAL JOB SCHEDULER'
- PATENT ABSTRACTS OF JAPAN vol. 12 no. 307 (P-747) ,22 Août 1988 & JP-A-63 076051 (FUJITSU LTD) 6 Avril 1988,

## Description

La présente invention concerne un système informatique ouvert à serveurs multiples. Elle est plus particulièrement applicable à des systèmes dont les différents éléments constitutifs peuvent appartenir à des environnements informatiques hétérogènes, par exemple distribué de type DCE (sigle anglais de Distributed computing environment), décrit dans les publications "OSF Distributed Computing Environment Rationale" de l'Open Software foundation, Inc. en date du 14/05/90 et "Distributed computing environment, an overview", de janvier 1992, ou de type non DCE (par exemple les systèmes dits "propriétaires" tels que ceux utilisant les systèmes d'exploitation -operating system, en anglais-GCOS7 et GCOS8 de la société demanderesse).

La tendance actuelle du développement des systèmes informatiques modernes est de former un tel système par association entre un système central dit "système hôte" ou "système client" ou plus simplement "client", d'une part, et une pluralité de "systèmes serveurs" plus simplement appelés "serveurs", d'autre part. Tout utilisateur du système informatique fait tourner des applications de types extrêmement variés sur le système central. Ces dernières font appel à des services qui fournissent des informations nécessaires au traitement du ou des problèmes qu'elles traitent, lesquels sont offerts par les serveurs. Ces derniers peuvent être également appelés "alliés". On a alors affaire à un système informatique distribué à alliés multiples (multiple ally distributed computing system, en anglais).

Un exemple de réalisation d'un tel système est formé par l'association d'un système central du type DPS7000 ou 9000 et de serveurs du type DPX-20 commercialisés par la société demanderesse. Le système central qui sera désormais appelé client dans la suite du texte, communique avec ses alliés par l'intermédiaire d'un réseau de type connu normalisé, par exemple de type ETHERNET (norme ISO 8802.3) ou encore de type FDDI (norme ANSI X3T9-5) etc. Chacun des alliés peut fournir au client le même type de services.

Lorsque une application en train de tourner requiert l'utilisation d'un service déterminé, dans la pratique courante, le client procède de la manière suivante :
- ou bien, il choisit de manière purement aléatoire l'allié qui lui fournira ce service et lui confie ce travail,
- ou bien, il effectue un choix circulaire parmi tous ses alliés, c'est-à-dire qu'il confie tour à tour, toujours dans le même ordre temporel, le travail de fourniture des services successivement requis par la ou les applications : ainsi, si le client possède trois alliés, il confiera à l'allié No 1 le travail de fourniture de services requis en premier dans le temps par une première application, à l'allié No 2 celui requis en second dans le temps par une seconde application (ou éventuellement par la même première), à l'allié No 3 celui requis en troisième dans le temps par une troisième et ainsi de suite dans l'ordre : allié No 1, No 2, No 3, No 1, etc.

Que ce soit dans l'un ou l'autre des deux cas décrits ci-dessus, il est clair que ni le travail du client ni celui des alliés n'est optimisé dans le temps, d'une part, et que les possibilités de ceux-ci en matière de débit et de performances sont utilisées bien au-dessous de leur niveau maximum, d'autre part.

Un procédé de répartition de la charge tel que décrit dans le préambule de la première revendication est divulgué dans le document US-A-5,249,290, par exemple. Ce procédé comprend en outre des moyens de calcul de la charge d'un serveur, ainsi que des moyens de mémorisation de la charge de chacun des serveurs. La répartition s'effectue en choisissant le serveur qui est le moins chargé au moment où une application émet une requête.

La présente invention permet de remédier à ces inconvénients en utilisant comme fondement principal le calcul de la charge de chacun des alliés : chacun des alliés calcule sa propre charge selon des critères propres à chaque application, ainsi que son évolution prévisible dans le temps et transmet ces deux facteurs au client. Ce dernier, lorsqu'une application déterminée requiert les services d'un serveur, choisit celui le moins chargé durant la période de temps où les services devront être rendus et lui confie le travail de fourniture des services demandés.
Selon l'invention, le système informatique ouvert à serveurs multiples, comprenant un premier système central dit "client" associé par l'intermédiaire d'un réseau de communication à une pluralité de systèmes serveurs, le client mettant en oeuvre une pluralité d'applications pouvant utiliser les services offerts par tout ou partie des serveurs, le client et ses serveurs pouvant appartenir à des environnements informatiques hétérogènes (environnement informatique distribué de type DCE ou de type non distribué non DCE), est caractérisé en ce que il comprend :
**1) au niveau de chaque serveur :**
   - **des moyens de calcul de charge** calculant pour celui-ci, à des premiers instants d'échantillonnage déterminés de période **X**, la charge qu'il supporte en fonction du taux d'utilisation des principaux éléments qui le constituent, d'une part, et du réseau, d'autre part,
   - **des moyens de calcul du taux d'évolution de la charge** à ces mêmes premiers instants (pente de la droite de charge),
   - **des moyens de mémorisation**, à ces premiers instants, **de la charge et de son taux d'évolution,**
**2) au niveau du client :**
   - **un processus de scrutation** (polling process, en anglais) demandant à chaque serveur, à des seconds instants d'échantillonnage déterminés de période **Y**, de lui fournir la pente et la moyenne de la charge calculée sur un nombre déterminé de période **X**,
   - **des seconds moyens de mémorisation de la pente et de la moyenne de la charge de tous les serveurs,** à ces mêmes seconds instants, commandés par le dit processus,
   - **Des moyens de choix du serveur le moins chargé** pendant la période estimée où les services demandés par l'application en train de tourner, devront être rendus.

D'autres caractéristiques et avantages de la présente invention apparaîtront dans la description suivante donnée à titre d'exemple non limitatif et en se référant aux dessins annexés. Sur ces dessins :
- La figure 1 est un schéma général montrant un système informatique ouvert à serveurs multiples, selon l'invention,
- La figure 2 est un schéma plus détaillé montrant un exemple de réalisation préféré du système selon l'invention,
- La figure 3 composée des figures 3a et 3b, montre des graphiques représentant l'évolution au cours du temps de la charge de plusieurs serveurs,
- La figure 4 montre, pour un serveur donné, les moyens de mémorisation de la charge au cours du temps,
- La figure 5 montre un exemple de répartition des différents facteurs de pondération, pour une application donnée, intervenant dans le calcul de la charge d'un serveur.

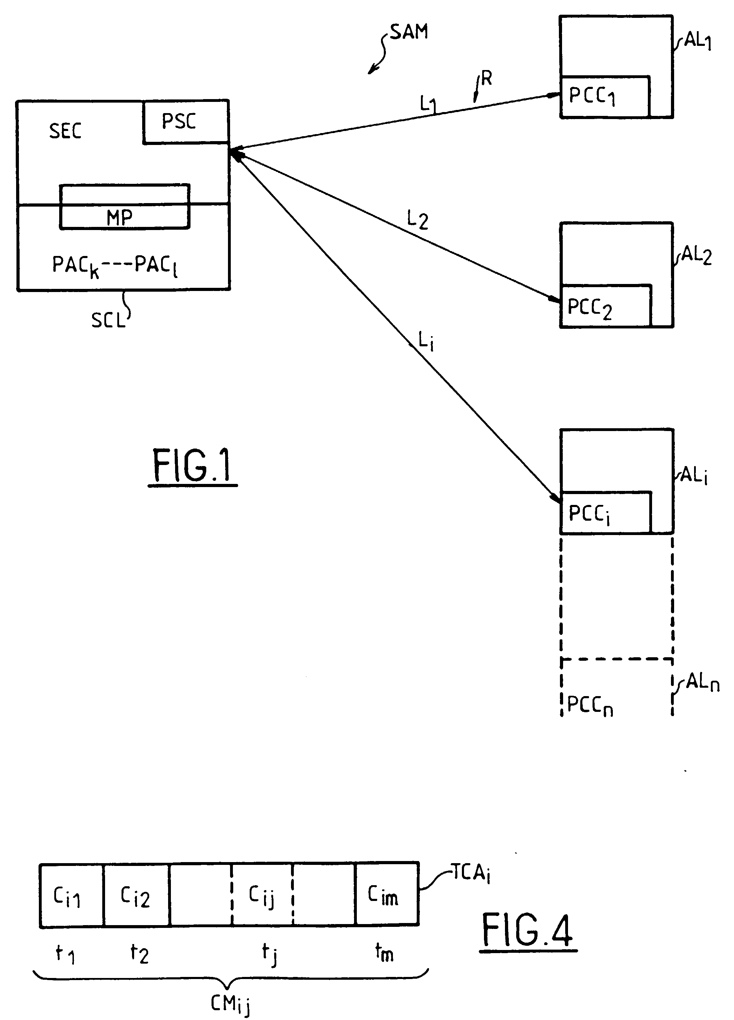

On se reporte à la figure 1.

Le système informatique ouvert à serveurs multiples SAM, selon l'invention, comprend :
- Le système client SCL,
- Les serveurs multiples AL1, AL2, ...ALi, ...ALn.

Dans la suite de la description, on désignera les serveurs sous le nom d'alliés, étant entendu que l'un comme l'autre des deux termes sont équivalents.

Le client SCL et les alliés sont reliés entre eux par l'intermédiaire d'un réseau R, symbolisé à la figure 1 par les liaisons L1 à Ln reliant respectivement SCL à chacun des alliés AL1 à ALn. Celles-ci sont de même type et normalisées selon l'un des standards mentionnés plus haut. Des liaisons identiques relient les alliés entre eux mais ne sont pas représentées à la figure 1, car elles ne sont pas essentielles pour la compréhension de l'invention.

Le client comprend :
- Son système d'exploitation (operating system, en anglais), à savoir SEC,
- Un processus de scrutation PSC,
- Une pluralité d'applications PACk tournant sous le contrôle de SEC,
- Une mémoire partagée MP entre les différentes applications et le processus de scrutation PSC.
- Un fichier FAC relatif aux différents alliés.

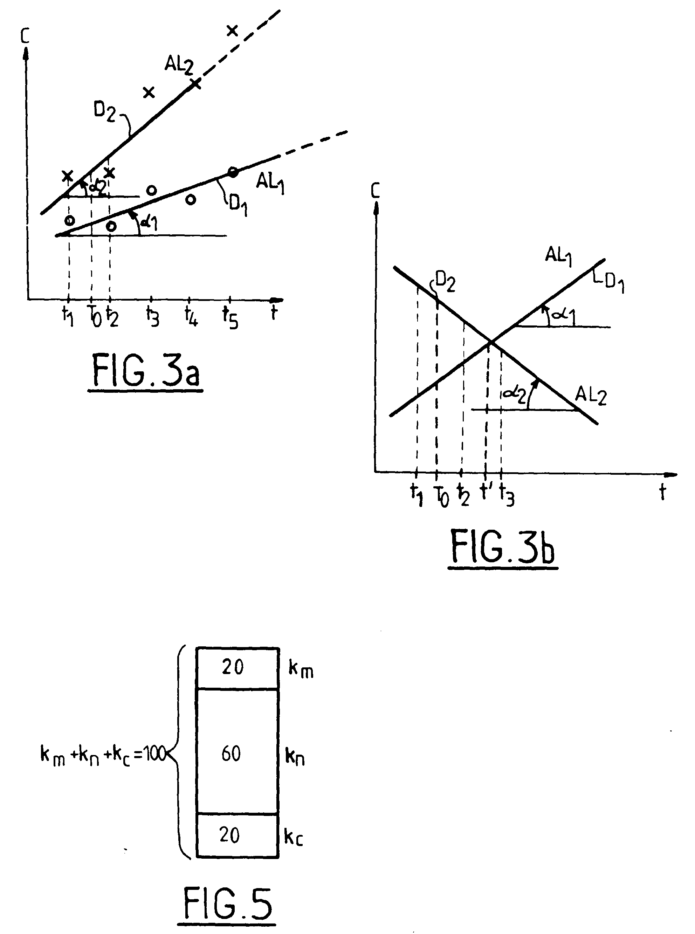

Chacun des alliés comprend un processus de calcul de charge, à savoir PCC1, PCC2, ..., PCCi, ..., PCCn, qui calcule à des premiers instants d'échantillonnage tj de période X, la charge de l'allié correspondant, et son évolution en fonction du temps, c'est-à-dire la pente de la droite de charge (pour plus de détails, on se référera à la suite de la description relative aux figures 3a à 3b). La charge supportée par un allié est fonction du taux d'utilisation des différents éléments qui le constituent -processeur(s) central, mémoire(s) associée(s) au processeur, entrées/sorties- et de celui du réseau. Elle dépend de la nature de l'application, d'une manière qui sera expliquée plus en détail dans la suite du texte. A ces mêmes instants, la charge Ci d'un allié ALi est mémorisée par ce dernier, ainsi que son évolution.

Le processus de scrutation PSC demande à chaque allié ALi, à des seconds instants d'échantillonnage déterminés Tj de période Y supérieure à X, de lui fournir la pente de la droite de charge et la moyenne de cette charge calculée sur un nombre déterminé de périodes **X**.
Lorsque une application PACk est en train de tourner dans SCL, elle demande à un instant déterminé T, par l'intermédiaire de PSC, à l'un des alliés, de lui rendre des services déterminés. Ceux-ci seront rendus à partir de l'instant T0 et sont prévus pour durer pendant un intervalle de temps Δ t. PSC choisit alors l'allié le moins chargé pour rendre ces services. On entend par allié le moins chargé celui qui possède alors, entre tous les alliés, la valeur minimum de la charge moyenne prédite par le dit processus PSC à partir de l'instant T0, pour une durée égale à Δ t. Cette valeur minimum est calculée en fonction des valeurs de la pente et de la charge moyenne prédites pour chaque allié durant cet intervalle.

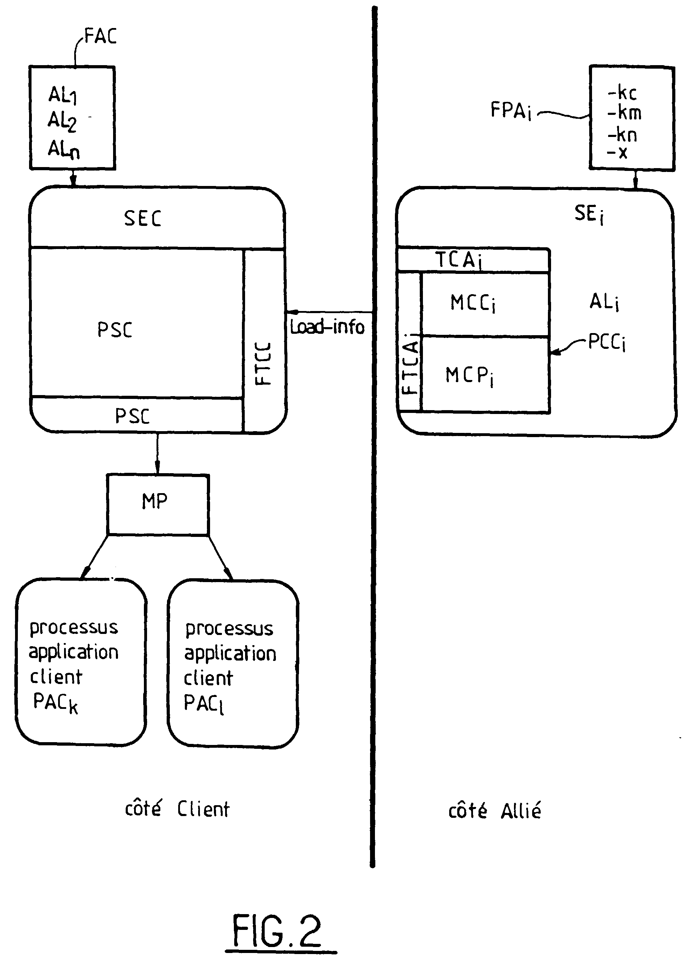

On considère la figure 2.

Chaque allié ALi comporte son propre système d'exploitation SEi qui organise le travail d'une pluralité de processus et de fonctions. On ne s'intéresse ici qu'au processus qui concerne l'invention, à savoir le processus de calcul de charge PCCi. ALi contient en outre une mémoire TCAi, de préférence de type circulaire, contenant la valeur de sa charge Ci pour un nombre donné d'instants d'échantillonnage successifs t1, t2, ...tj, , tm. La valeur de m est telle que PCCi puisse calculer la valeur moyenne de la charge Ci avec suffisamment de précision entre t1 et tm, ainsi que la pente de la droite de charge. Ce nombre m est déterminé en fonction de la durée estimée des services à rendre. Un exemple de TCAi est montré à la figure 4.

Le processus PCCi comprend :
- Des moyens de calcul MCCi de Ci pour chacun des instants tj,
- Des moyens de calcul de la pente de la droite de charge, à savoir MCPi,
- un module de communication FTCAi
- Un fichier contenant les facteurs de pondération de la charge, à savoir FPAi.

Les moyens MCCi calculent la charge de la manière suivante. On a :
Ci = kc*Wcpu + km*Wmem + kn*Wnet, où :
- Wcpu est le pourcentage d'utilisation dans le temps du processeur central de l'allié ALi.
- Wmem est le pourcentage d'utilisation de la mémoire de l'allié, c'est-à-dire le rapport entre la capacité de mémoire réellement utilisée et la capacité totale de la mémoire de l'allié ALi.
- Wnet est le pourcentage d'utilisation du réseau par l'allié, c'est-à-dire le rapport entre le nombre d'informations émises et reçues par ALi et le débit maximal admissible sur le réseau (10 Mb/s pour un réseau ETHERNET) .
- kc, km, kn sont des facteurs de pondération spécifiques du processeur, de la mémoire, et du réseau. Leur somme est égale à 100. Leurs valeurs respectives dépendent de la nature de l'application en train de tourner sur le client. Ainsi, si l'on considère la figure 5, on a kn = 60, et km = kc = 20, car cet exemple est relatif à une application qui utilise essentiellement le réseau R. De ce fait, le facteur de pondération kn relatif au réseau est très important, en tout cas plus important que les deux autres.

Lorsque les moyens MCCi ont calculé la charge Ci pour les instants t1 à tm, les différentes valeurs correspondantes ont été mémorisées dans la mémoire TCAi, de la manière indiquée à la figure 4. Ainsi, les valeurs Ci1, Ci2, ...Cij,..., Cim relatives à ces mêmes instants apparaissent de gauche à droite à la figure 4. Par ailleurs, on peut établir la droite de charge donnant l'évolution de celle-ci en fonction du temps. Plusieurs exemples de telles droites sont données aux figures 3a et 3b. Pour obtenir chacune de celles-ci, on cherche à ce qu'elle soit la plus proche des différents points (méthode mathématiques des moindres carrés) . Chacun des points a comme ordonnée la charge Cij et en abscisse le temps tj.

On considère donc les figures 3a et 3b.

La figure 3a montre deux droites de charge D1 et D2 relatives aux alliés AL1 et AL2, (il en sera de même pour la figure 3b) et présentant entre les instants t1 et t2 des pentes positives α1 et α2, cette dernière étant supérieure à α1. Toutes les charges relatives à la droite D2 sont supérieures à celles relatives à la droite D1. Par suite, si, à l'instant T0 compris entre t1 et t2, une application PACk du client SCL veut les services d'un allié (supposé ici choisi entre AL1 et AL2) , le client choisira AL1 dont la charge indiquée par la droite D1 est inférieure à celle de AL2 indiquée par D2.

A La figure 3b, les droites D1 et D2 se coupent à l'instant t' compris entre t2 et t3. Cela signifie que leurs pentes respectives sont de signes opposés. α1 est positive alors que α2 est négative. Par suite, si le temps d'utilisation des services demandés par PACk est compris entre t1 et t2, le client choisira AL1 dont la charge moyenne entre ces instants est inférieure à celle de AL2.

Les moyens de calcul de charge MCCi calculent également, pour le compte du client SCL, la moyenne de la charge Ci de l'allié ALi sur une durée égale à un nombre déterminé de périodes **X**, m par exemple. On fait la somme des charges correspondantes Ci1 à Cim, et on divise par le nombre m d'échantillons. Cette moyenne de la charge est donc envoyée au client SCL à sa demande, toutes les Y secondes, par l'intermédiaire du module de communication FTCAi.

Le calcul de la pente de la droite de charge s'effectue selon la méthode des moindres carrés. Ceci est accompli par les moyens MCPi.

Le fichier FPAi contient, pour chaque allié ALi, les différents facteurs de pondération kc, km, kn, qui lui sont fournis par l'utilisateur de l'application client PACk. La valeur de X est également fournie par ce dernier et dépend de la précision que l'utilisateur entend donner à la définition des droites de charge.

On revient à la figure 2 pour examiner de manière plus détaillée la fonction de chacun des éléments constitutifs du client SCL. On notera qu'à cette même figure, on a représenté une seconde application PACI pour bien illustrer le fait que plusieurs applications peuvent tourner sur un même client, comme il est parfaitement connu de l'homme du métier. Il est évident que le raisonnement qui est fait ici pour une seule application PACk l'est également pour une pluralité d'entre elles. On se limitera donc dans la suite du texte à ne considérer que la seule PACk.

Le système d'exploitation SEC de SCL est de type Unix, par exemple, ou propriétaire (par exemple de type GCOS7 ou GCOS8 développés par la demanderesse et décrits dans les manuels d'utilisation des systèmes DPS7000 et DPS9000 commercialisés par cette dernière) .

Le fichier FAC contient la liste mise à jour régulièrement par l'utilisateur de tous les alliés ALi associés aux travaux effectués par le client à un moment donné, avec leurs caractéristiques : adresse, nom, état (il tourne ou il ne tourne pas). La valeur de Y est choisie directement par l'utilisateur selon les mêmes critères que X.

Le processus de scrutation (polling process) PSC est associé à un module de communication FTCC, dont le rôle est identique côté client à celui de FTCAi côté ALi. Ces deux modules communiquent entre eux au moyen de procédures d'appel de type connu, par exemple, RPC décrites dans les manuels d'utilisation de la société demanderesse. Les données DCi qu'ils échangent sont relatives à la charge moyenne et à la pente de la droite de charge de ALi aux seconds instants d'échantillonnage Tj de période Y de SCL.

Dès que PSC a obtenu ces informations DCi (α, CMij), elles sont rangées dans un tableau TCCi affecté à ALi( voir également figure 4 ). Les tableaux TCCi contenant les informations DCi sont, chacun, un sous-ensemble d'un tableau général TCC. Chaque tableau TCCi contient le nom, l'adresse, l'état; la charge moyenne, la pente de ALi.

Les moyens de choix MDC associés à PSC, choisissent l'allié le moins chargé en balayant tous les tableaux TCCi et, dès que cela est fait, inscrivent les références de ce dernier dans la mémoire partagée MP.

Par suite, lorsqu'une application quelconque PACk (que l'homme du métier appelle également "processus application client" , voir figure 2) a besoin qu'un allié ALi lui rende des services, (on rappelle qu'en général, elle demande des services à un instant T, pour que ceux-ci lui soient rendus à un instant T0 postérieur à T et que la durée estimée des services est estimée à Δ t, voir explications données plus haut) , elle accède à la mémoire partagée MP et, de ce fait, y trouve les références de l'allié ALi le moins chargé. Elle lui demande alors, par l'intermédiaire des modules FTCC et FTCAi de lui rendre les services qu'elle requiert à partir de T0.

## Revendications

1. Système informatique (SAM) ouvert à serveurs multiples (ALi) comprenant un premier système central (SCL) dit "client" associé par l'intermédiaire d'un réseau de communication (R) à une pluralité de systèmes serveurs (AL1, .., ALi, ..., ALn), le client mettant en oeuvre une pluralité d'applications (PACk) pouvant utiliser les services offerts par tout ou partie des serveurs, le client et ses serveurs pouvant appartenir à des environnements informatiques hétérogènes, environnement informatique distribué de type DCE ou de type non distribué non DCE, caractérisé en ce qu'il comprend :
**1) au niveau de chaque serveur (ALi)** :
- **des moyens de calcul de charge** (MCCi) calculant pour celui-ci, à des premiers instants d'échantillonnage déterminés de période **X**, la charge qu'il supporte en fonction du taux d'utilisation des principaux éléments qui le constituent, d'une part, et du réseau, d'autre part,
- **des moyens de calcul du taux d'évolution de la charge** (MCPi) à ces mêmes premiers instants, à savoir pente de la droite de charge,
- **des moyens de mémorisation** (TCAi) , à ces premiers instants, **de la charge et de son taux d'évolution,**
**2) au niveau du client (SCL) :**
- **un processus de scrutation** (PSC) demandant à chaque serveur, à des seconds instants d'échantillonnage déterminés de période **Y**, de lui fournir la pente et la moyenne de la charge calculée sur un nombre déterminé de périodes **X**,
- **des seconds moyens de mémorisation de la pente et de la moyenne de la charge** (TCCi, TCC, MP) de tous les serveurs à ces mêmes seconds instants, commandés par le dit processus (PSC),
- **des moyens de choix (MDC) du serveur le moins chargé** pendant la période estimée (T0, T0+Δ t) où les services demandés par l'application client en train de tourner, devront être rendus.

2. Système selon la revendication 1, caractérisé en ce que les moyens de mémorisation (TCAi) de la charge au niveau de chaque serveur (ALi) sont constitués par une mémoire circulaire contenant autant de valeurs de la charge qu'il y a d'instants d'échantillonnages successifs t1, t2, ..., tj, ..., tm, le nombre de ceux-ci étant déterminé en fonction de la durée des services à rendre par le serveur considéré.

3. Système selon la revendication 1, caractérisé en ce que chaque serveur ayant un processeur central et une mémoire associée à ce dernier, la charge Ci calculée par les moyens de calcul de charge (MCCi) est égale à :
- kc*Wcpu+km*Wmem+kn*Wnet, où :
- Wcpu est le pourcentage d'utilisation dans le temps du processeur central du serveur (ALi),
- Wmem est le pourcentage d'utilisation de la mémoire du serveur (ALi),
- Wnet est le pourcentage d'utilisation du réseau (R) par le serveur(ALi),
- kc, km, kn, étant des facteurs de pondération spécifiques du processeur, de la mémoire et du réseau.

4. Système selon la revendication 1, caractérisé en ce que les moyens de calcul du taux d'évolution de la charge (MCPi) calculent la pente de la droite de charge par la méthode des moindres carrés.

5. Système selon la revendication 3, caractérisé en ce que chaque serveur (ALi) comprend un fichier contenant les différents facteurs de pondération kc, km, kn qui lui sont fournis par l'utilisateur de l'application client, ainsi que la valeur de **X** qui dépend de la précision que ce dernier donne à la définition des droites de charge.

6. Système selon la revendication 1, caractérisé en ce que les seconds moyens de mémorisation du client comprennent autant de tableaux (TCCi) qu'il y a de serveurs, chacun des tableaux étant affecté à l'un de ceux-ci (ALi) et comprenant son nom, son adresse, son état, sa charge moyenne, et la pente de sa droite de charge.

7. Système selon la revendication 6, caractérisé en ce que les moyens de choix (MDC) choisissent le serveur (ALi) le moins chargé en balayant tous les tableaux et en inscrivant les références de ce serveur dans une mémoire partagée (MP) entre les différentes applications et le processus de scrutation (PSC).

8. Système selon la revendication 7, caractérisé en ce que chaque application (PACk) lit dans la mémoire partagée (MP) quel est le serveur le moins chargé et lui demande de lui rendre les services requis.

## Patentansprüche

1. Offenes Datenverarbeitungssystem (SAM) mit mehreren Servern (ALi), das ein erstes Zentralsystem (SCL) enthält, das "Client" genannt wird, dem über ein Kommunikationsnetz (R) mehrere Serversysteme (AL1, ..., ALi ..., ALn) zugeordnet sind, wobei der Client mehrere Anwendungen (PACk) ausführt, die die Dienste verwenden können, die von allen oder einem Teil der Server angeboten werden, wobei der Client und seine Server heterogenen Datenverarbeitungsumgebungen, Datenverarbeitungsumgebungen des verteilten Typs DCE oder des nicht verteilten Typs Nicht-DCE angehören können, dadurch gekennzeichnet, daß es umfaßt:
1) auf seiten jedes Servers (ALi):
- Mittel zum Berechnen der Belastung (MCCi), die für diesen zu bestimmten ersten Abtastzeitpunkten mit Periode X die Belastung berechnen, die er in Abhängigkeit vom Nutzungsgrad der ihn bildenden Hauptelemente einerseits und des Netzes andererseits unterstützt,
- Mittel zum Berechnen des Entwicklungsgrades der Belastung (MCPi) zu denselben ersten Zeitpunkten, d. h. der Steigung der Belastunggerade,
- Mittel zum Speichern (TCAi) zu diesen ersten Zeitpunkten der Belastung und ihres Entwicklungsgrades,
2) auf seiten des Client (SCL):
- einen Abfrageprozeß (PSC), der von jedem Server zu bestimmten zweiten Abtastzeitpunkten mit Periode Y fordert, ihm die Steigung und den Mittelwert der berechneten Belastung für eine bestimmte Anzahl von Perioden X zu liefern,
- zweite Mittel zum Speichern der Steigung und des Mittelwerts der Belastung (TCCi, TCC, MP) sämtlicher Server zu denselben zweiten Zeitpunkten, die von dem Prozeß (PSC) gesteuert werden,
- Mittel (MDC) zum Wählen des am wenigsten belasteten Servers während der geschätzten Periode (T0, T0 + Δt), in der die Dienste, die von der momentan ablaufenden Client-Anwendung gefordert werden, verfügbar werden.

2. System nach Anspruch 1, dadurch gekennzeichnet, daß die Mittel (TCAi) zum Speichern der Belastung auf seiten jedes Servers (ALi) aus einem zirkulären Speicher gebildet sind, der so viele Werte der Belastung enthält, wie aufeinanderfolgende Abtastzeitpunkte t1, t2, ..., tj, ..., tm vorhanden sind, wobei deren Anzahl in Abhängigkeit von der Dauer der Dienste, die vom betrachteten Server bereitgestellt werden sollen, bestimmt wird.

3. System nach Anspruch 1, dadurch gekennzeichnet, daß, da jeder Server einen Zentralprozessor und einen diesem letzteren zugeordneten Speicher enthält, die von den Mitteln (MCCi) zur Berechnung der Belastung berechnete Belastung Ci gleich:
- kc • Wcpu + km • Wmem + kn • Wnet ist, wobei:
- Wcpu der zeitliche Nutzungsprozentsatz des Zentralprozessors des Servers ALi) ist,
- Wmem der Nutzungsprozentsatz des Speichers des Servers (ALi) ist,
- Wnet der Nutzungsprozentsatz des Netzes (R) durch den Server (ALi) ist,
- kc, km, kn spezifische Gewichtungsfaktoren des Prozessors, des Speichers bzw. des Netzes sind.

4. System nach Anspruch 1, dadurch gekennzeichnet, daß die Mittel (MCPi) zum Berechnen des Entwicklungsgrades der Belastung die Steigung der Belastunggerade durch die Methode der kleinsten Quadrate berechnen.

5. System nach Anspruch 3, dadurch gekennzeichnet, daß jeder Server (ALi) eine Datei enthält, die die verschiedenen Gewichtungsfaktoren kc, km, kn, die ihm vom Anwender der Client-Anwendung geliefert werden, sowie den Wert von X, der von der Genauigkeit abhängt, die dieser letztere der Definition der Belastungsgeraden verleiht, enthält.

6. System nach Anspruch 1, dadurch gekennzeichnet, daß die zweiten Speichermittel des Client so viele Tabellen (TCCi) enthalten, wie Server vorhanden sind, wobei diese Tabellen einem von ihnen (ALi) zugewiesen sind und dessen Namen, dessen Adresse, dessen Zustand, dessen mittlere Belastung und die Steigung seiner Belastungsgeraden enthält.

7. System nach Anspruch 6, dadurch gekennzeichnet, daß die Wählmittel (MDC) den am wenigsten belasteten Server (ALi) wählen, indem sie sämtliche Tabellen durchsuchen und die Referenzen dieses Servers in einen von den verschiedenen Anwendungen und vom Abfrageprozeß (PSC) gemeinsam genutzten Speicher schreiben.

8. System nach Anspruch 7, dadurch gekennzeichnet, daß jede Anwendung (PACk) in dem gemeinsam genutzten Speicher (MP) liest, welches der am wenigsten belastete Server ist, und ihn auffordert, ihm die geforderten Dienste zur Verfügung zu stellen.

## Claims

1. Open computer system (SAM) with multiple servers (ALi) comprising a first central system (SCL) known as "client" associated via a communication network (R) to a plurality of server systems (AL1, ..., ALi, ..., ALn), the client using a plurality of applications (PACk) capable of using the services offered by all or some of the servers, it being possible for the client and its servers to belong to heterogeneous computer environments, distributed computer environment of DCE type or non-distributed non-DCE type, characterised in that it comprises:
**1) in each server (ALi):**
- **load calculation means** (MCCi) calculating for this, at given first sampling moments of a period **X**, the load that it supports as a function of the rate of use of the principle members constituting it, on the one hand, and of the network, on the other hand,
- **means (MCPi) for calculating the rate of change in the load** at these same first moments, namely gradient of the load line,
- **means** (TCAi) **for storing**, at these first moments, **the load and its rate of change**,
**2) in the client (SCL):**
- **a scanning process** (PSC) requesting each server, at second given sampling moments of a period **Y**, to supply to it the gradient and mean value of the load calculated on a given number of periods **X**,
- **second means (TCCi, TCC, MP) for storing the gradient and mean value of the load** of all the servers at these same second moments, controlled by said process (PSC),
- **second means (TCCi, TCC, MP) for storing the gradient and mean value of the load** of all the servers at these same second moments, controlled by said process (PSC),
- **means (MDC) for selecting the least loaded server** during the estimated period (T0, T0+Δ t) where the services requested by the client application currently running will have to be provided.

2. System according to Claim 1, characterised in that the means (TCAi) for storing the load in each server (ALi) are constituted by a circular memory containing as many values of the load as there are successive sampling moments t1, t2, ..., tj, ..., tm, the number of these being determined as a function of the duration of the services to be provided by the server in question.

3. System according to Claim 1, characterised in that each server having a central processor and a memory associated with the latter, the load Ci calculated by the load calculation means (MCCi) is equal to:
- kc*Wcpu+km*Wmem+kn*Wnet, where:
- Wcpu is the percentage use, in time, of the central processor of the server (ALi),
- Wmem is the percentage use of the memory of the server (ALi),
- Wnet is the percentage use of the network (R) by the server (ALi),
- kc, km, kn being specific weighting factors of the processor, the memory and the network.

4. System according to Claim 1, characterised in that the means for calculating the rate of change of the load (MCPi) calculate the gradient of the load line by the least squares method.

5. System according to Claim 3, characterised in that each server (ALi) comprises a file containing the various weighting factors kc, km, kn that are supplied to it by the user of the client application, as well as the value of **X**, which depends on the accuracy given by the latter to the definition of the load lines.

6. System according to Claim 1, characterised in that the second storage means of the client comprise as many tables (TCCi) as there are servers, each of the tables being assigned to one of these (ALi) and comprising its name, its address, its status, its mean load, and the gradient of its load line.

7. System according to Claim 6, characterised in that the selection means (MDC) select the least loaded server (ALi) by browsing all the tables and entering the references of this server in a shared memory (MP) between the various applications and the scanning process (PSC).

8. System according to Claim 7, characterised in that each application (PACk) reads from the shared memory (MP) which is the least loaded server and asks it to provide for it the services required.
